# EUROPÄISCHE PATENTSCHRIFT

(11) **EP 3 417 498 B1**
(45) Veröffentlichungstag und Bekanntmachung des Hinweises auf die Patenterteilung: **01.09.2021**
(21) Anmeldenummer: 17708434.0
(22) Anmeldetag: 10.02.2017
(51) Int. Cl.: H01M 4/04, H01M 4/134, H01M 4/38, H01M 10/052

(54) **VERFAHREN ZUR HERSTELLUNG VON AUF SILIZIUM BASIERENDEN ANODEN FÜR SEKUNDÄRBATTERIEN**
METHOD FOR THE PRODUCTION OF SILICONE-BASED ANODES FOR SECONDARY BUTTERIES
PROCEDE DE PRODUCTION DE ANODES À BASE DE SILICIUM POUR ACCUMULATEURS

(30) Priorität: 15.02.2016 DE 102016001949
(43) Veröffentlichungstag der Anmeldung: 26.12.2018
(73) Patentinhaber: Helmholtz-Zentrum Dresden - Rossendorf e.V., 01328 Dresden (DE); Technische Universität Bergakademie Freiberg, 09599 Freiberg (DE); Rovak GmbH, 01723 Grumbach (DE)
(72) Erfinder: CHERKOUK, Charaf, 01326 Dresden (DE); MEYER, Dirk, C, 01326 Dresden (DE); LEISEGANG, Tilmann, 01097 Dresden (DE); PEREZ, Teresa, Orellana, 14165 Berlin (DE); PRUCNAL, Slawomir, 01328 Dresden (DE); SKORUPA, Wolfgang, 01108 Dresden (DE)
(74) Vertreter: Rauschenbach, Marion
(86) Internationale Anmeldenummer: PCT/EP2017/052956
(87) Internationale Veröffentlichungsnummer: WO 2017/140581

(56) Entgegenhaltungen:
- US-A1- 2009 061 319
- US-A1- 2011 108 108
- US-A1- 2012 070 741

## Beschreibung

Die Erfindung betrifft ein Verfahren zur Herstellung von auf Silizium basierenden Anoden für Sekundärbatterien.

Die elektrochemische Energiespeicherung ist ein wesentlicher Grundpfeiler einer weltweit angestrebten Energiewende, um den fluktuierenden regenerativ erzeugten Strom zwischenzuspeichern sowie für stationäre und mobile Anwendungen bereitzustellen. Um einer rohstoffbedingten Verknappung und damit einer Erhöhung der Kosten für insbesondere Sekundärbatterien entgegenzuwirken, bedarf es neben der Diversifizierung der Energiespeicherkonzepte auch neuer Materialien. Diese sollten einerseits die technische Performance entsprechender Energiespeicherkonzepte verbessern (u. a. Kapazität, Energiedichte, Lebensdauer), andererseits auch die Herstellungskosten minimieren. Letzteres kann insbesondere durch die Verwendung von gut verfügbaren chemischen Elementen, wie es das Silizium darstellt, für das bereits eine breite Technologiebasis besteht, gewährleistet werden.

Die Auswahl des Siliziums als vielversprechendes und ressourceneffizientes Anodenmaterial basiert auf einem Algorithmus, der im Rahmen des Projekts CryPhysConcept (BMBF: 03EK3029A) entwickelt wurde: Neben elektrochemischen Kenngrößen schließt er die Fragen der Ressourcenverfügbarkeit, des Recyclings und der Kosten - also der Kritikalität - sowie der Umweltverträglichkeit und Betriebssicherheit ein und erlaubt eine Gewichtung entsprechend einer gewünschten Speicheranwendung.

Sekundärbatterien können Lithium-Batterie-Sekundärspeicher sein, die die höchste Entwicklungsdynamik im Hinblick auf breite Anwendungen wie in Hörgeräten, Smartphones, Laptops und als Puffer für das Energienetz sowie als Traktionsbatterien für Elektrofahrzeuge besitzen.

Für die verstärkte Nutzung regenerativer Energien für die Elektromobilität sind zudem Traktionsbatterien mit bis zu einigen zehn kWh für Elektrofahrzeuge erforderlich. Moderne Sekundärspeicher, z. B. auf Basis der Lithium-Ionen-Technologie, sind für den Bereich der Elektromobilität sehr gut geeignet. Allerdings schränkt die derzeitige Speicherdichte die Reichweite solcher Elektrofahrzeuge stark ein. Einen weiteren Aspekt betrifft neben der Sicherheit der Preisnachteil von Elektroautos aufgrund der weiterhin teueren Batteriezellen. Hier können preiswerte Batteriematerialien für beispielsweise Lithium-Zellen auf Si-Basis in hervorragender Weise beitragen.

Silizium als Anodenmaterial weist eine hohe Speicherkapazität von ca. 4212 mAhg⁻¹ bei Raumtemperatur gegenüber den herkömmlichen kohlenstoffartigen Materialien, wie z.B. Graphit mit einer Speicherkapazität von 372 mAhg⁻¹, auf. Herausforderungen bei der Nutzung von Silizium als Anodenmaterial ergeben sich jedoch hinsichtlich der zum Teil erheblichen Volumenänderung (Volumenkontraktion und -expansion) der Wirtsmatrix während der Einlagerung und der Auslagerung der mobilen Ionenspezies bei Aufladung und Entladung entsprechender Energiespeicher. Die Volumenänderung liegt für Graphit bei ca. 10 %, für Silizium dagegen bei ca. 400 %. Die Volumenänderung des Anodenmaterials bei Verwendung von Silizium führt zu inneren Spannungen, Rissbildung, Pulverisierung des aktiven Materials der Wirtsmatrix (Silizium) und schließlich zur kompletten Zerstörung der Anode.

Für Anoden auf der Basis von Silizium werden nachfolgend ausgewählte wissenschaftliche Arbeiten angegeben, welche dem der Erfindung zugrunde liegenden Verfahren zugeordnet werden können.

In der aktuellen Batterieherstellung werden bereits kohlenstoff- bzw. siliziumbasierte Nanoröhrchen und Nanodrähte als Anodenmaterialien in aufladbaren Lithium-Batterien genutzt. Der größte Vorteil solcher Nanomaterialien ist neben der Erhöhung der Geschwindigkeit der Einlagerung und der Auslagerung des Lithiums auch der Oberflächeneffekt. Eine große Oberfläche vergrößert die Kontaktfläche für den Elektrolyten und den damit verbundenen Fluss von Li⁺-Ionen (Leerstellen) durch die Grenzfläche, wie in der Druckschrift M. R. Zamfir, H. T. Nguyen, E. Moyen, Y. H. Leeac and D. Pribat: Silicon nanowires for Li-based battery anodes: a review, Journal of Materials Chemistry A (a review), 1, 9566 (2013) beschrieben ist. Untersuchungen zu den kohlenstoffbasierten Nanoröhrchen und Nanodrähten, die in den Druckschriften R.S. Morris, B.G. Dixon, T. Gennett, R. Raffaelle, M.J. Heben: High-energy, rechargeable Li-ion battery based on carbon nanotube technology, J. of Power Sources, 138, 277 (2004) und Z. Zhou, J.J. Zhao, X.P Gao, Z. F. Chen, J.Yan, P.V. Schiever, M. Morinaga: Do composite single-walled nanotubes have enhanced capability for lithium storage?, Chem. Mater., 17, 992 (2005) beschrieben sind, zeigen zwar eine bessere Energiedichte (ca. 600 Wh/kg) im Vergleich zu Graphit, weisen aber während eines Ladeprozesses (bei Potentialen < 100 mV vs. Li/Li+) die Ablagerung einer reaktiven Lithiumschicht auf, was ein hohes Sicherheitsrisiko mit sich bringt. Dem entgegen besitzen siliziumbasierte Nanoröhrchen und Nanodrähte verglichen mit der theoretischen Speicherkapazität von Silizium von 4212 mAhg⁻¹ zwar zu kleineren Speicherkapazitäten von ca. 3400 mAhg⁻¹, weisen aber stabilere SiliziumStrukturen in Bezug auf die Volumenänderung des Siliziums nach der Einlagerung des Lithiums bis zu einer bestimmten Si-Strukturgröße auf, wie in der Druckschrift M. Green, E. Fielder, B. Scrosati, M. Wachtler and J. S. Moreno: Structured silicon anodes for lithium battery applications, Electrochem. Solid-State Lett., 6, A75-A79 (2003) beschrieben ist.

Im Allgemeinen hängt die Speicherkapazität von der Entladerate ab. So geht z.B. aus der Druckschrift: T. Song, J. Xia, J.-H. Lee, D. H. Lee, M.-S. Kwon, J.-M. Choi, J. Wu, S. K. Doo, H. Chang, W. I. Park, D. S. Zang, H. Kim, Y. Huang, K.-C. Hwang, J. A. Rogers and U. Paik: Arrays of sealed silicon nanotubes as anode for lithium ion batteries, Nano Lett., 10, 1710-1716 (2010) hervor, dass eine reversible Speicherkapazität von etwa 2600 mAhg⁻¹ bzw. 2100 mAhg⁻¹ bei einer Zyklierbarkeit von mehr als 50 Zyklen, einer Entladerate von C/20 bzw. C/5 sowie einer verbesserten axialen bzw. radialen Volumenänderung nach der Einlagerung des Lithiums von 35 % bzw. 120 % aufweist.

Ein anderes Beispiel ist ebenso in der Druckschrift Song, Taeseup; Xia, Jianliang; Lee, Jin-Hyon; Lee, Dong Hyun; Kwon, Moon-Seok; Choi, Jae-Man et al.: Arrays of sealed silicon nanotubes as anode for lithium ion batteries, Nano Lett. 10 (5), S. 1710-1716 (2010) beschrieben, welches zeigt, dass die dichtverpackten Si-basierten Nanoröhrchen als Arrays (30 nm-60 nm) in der Lage sind, die Leistungsverluste nach 50 Zyklen bei einer Entladerate zwischen C/20 bis C/5 des Anodenmaterials auf unter 20 % drastisch zu reduzieren.

Während sich die Angaben zur Kapazität und Volumenänderung beim Ansatz der Si-basierten Anoden unterscheiden, herrscht ein Konsens darüber vor, dass die Verbesserung der Leistung des Anodenmaterials sowie die Reduzierung der Volumenänderung auf zweierlei Gründe zurückzuführen sind.

Zum einen spielt der freie Raum zwischen den Nanostrukturen eine Schlüsselrolle beim Auffangen der Volumenexpansion im Material.

Zum anderen trägt die Verkleinerung der Strukturen zur Erleichterung der auftretenden Phasenübergänge bei der Legierungsbildung bei, wie in der Druckschrift A. S. Arico, P. Bruce, B. Scrosati, J.-M. Tarascon, W. Van Schalkwijk: Nanostructured materials for advanced energy conversion and storage devices, Nat. Mater., 4, 366 (2005) beschrieben ist.

Ebenfalls sehr aktuell sind Nanolegierungen. Im Mittelpunkt der Forschungsbemühungen steht der Ansatz zur Vergrößerung des freien Raums zwischen den Nanostrukturen zum Abfedern der Volumenkontraktion und Volumenexpansion, wie in der Druckschrift M. Winter, J. O. Besenhard: Electrochemical lithiation of tin and tin-based intermetallics and composites, Electrochim. Acta, 45, 31 (1999) beschrieben ist.

Entsprechende Versuche zeigen, dass an einer Zinn-Nanolegierung, die eine Kapazität von 550 mAhg⁻¹ besitzt, eine Zellspannung von 4 V und bis zu 50 Zyklen erreichen, wie in der Druckschrift J. Hassoun, S. Panero, B. Scrosati: Electrodeposited Ni-Sn intermetallic electrodes for advanced lithium ion batteries, J. of Power Sources, 160, 1336 (2006) beschrieben ist. Das Anodenverhalten von Zinn (mit einer theoretischen Speicherkapazität von 993 mAhg⁻¹) ähnelt dem des Siliziums bezüglich der Volumenänderung sehr. Auch Silizium-Nanosäulen weisen eine enorme Verringerung der Volumenänderung mit 80 % der gesamten Kapazität nach 100 Zyklen bei einer hohen Entladerate von 8C auf, wie in der Druckschrift P. L. Taberna, S. Mitra, P. Piozot, P. Simon, J. M. Tarascon: High rate capabilities Fe3O4-based Cu nano-architectured electrodes for lithium-ion battery applications, Nat. Mater., 5, 567 (2006) beschrieben ist.

In der Druckschrift WO 2015021368 A1 ist eine Li-Ionen-Batterie beschrieben, die neben einer Interkalationskathode aus einer mit Aluminiumoxid beidseitig beschichteten porösen Si-Anode mittels einer Atomlagenabscheidung (engl. Atomic layer deposition, ALD) besteht. Die Aluminiumoxidschicht dient sowohl als eine Passivierungsschicht an der Grenzfläche Elektrolyt/Anode als auch als eine Kontaktfläche der Anode. Hier wird die Volumenänderung des Siliziums nach der Einlagerung des Lithiums dadurch umgegangen, dass eine Schutzschicht an der Grenzfläche Elektrolyt/Anode aufgebracht wird.

Der Nachteil besteht darin, dass die schlechte elektrische Leitfähigkeit an der Grenzfläche zum Stromsammler in Kauf genommen wird.

In der Druckschrift WO 2012158608 A1 ist ein Verfahren zur Herstellung einer auf einer SiOₓ/Si-Schicht basierenden Anode für den Einsatz in einer Li-Ionen-Batterie beschrieben. Zur Herstellung der SiOₓ/Si-Schicht werden durch eine aufwendige mechanische Zerkleinerung durch Fräsen gewonnene SiOₓ/Si-Mikropartikeln eingebracht.

In der Druckschrift US 2014/0370386 A1 wird eine eutektische Legierung aus Si und mindestens einem metallischen Element, z.B. Ti, V, Cr, Mn, Fe, Co, Ni, Cu, Zr oder Nb, beschrieben, die zur Erzeugung von mikrostrukturierten Si-Legierungen (Strukturen kleiner als 4 µm) eingesetzt wird, welche stabile Entlade-/Ladeprozesse und eine lange Lebensdauer ermöglichen. Ein zusätzlicher Stromableiter aus Kupfer wird benötigt.

In der US 2009/061319 A1 wird eine Siliziumdünnfilmanode für eine Lithiumsekundärbatterie mit verbesserten Zykluseigenschaften und Kapazität sowie ein Herstellungsverfahren dafür offenbart. Das Herstellungsverfahren für eine Siliziumdünnfilmanode für eine Lithiumsekundärbatterie umfasst dabei das Herstellen eines Kollektors, der ein Metall enthält, das Ausbilden einer Anodenaktivmaterialschicht auf dem Kollektor, die Silizium enthält, das Bilden einer oder mehrerer Grenzflächenstabilisierungsschichten durch Tempern des Kollektors und der Anodenaktivmaterialschicht unter einer Inertatmosphäre, einer reduzierten Atmosphäre und einer Vakuumatmosphäre und das Ausbilden einer Kohlenstoffbeschichtungsschicht auf der Anodenaktivmaterialschicht durch Ausführen eines Glühprozesses in einer Kohlenwasserstoffatmosphäre.

Nach der US 2012/070741 A1 werden Batterieelektrodenstrukturen bereitgestellt, die hohe Massenbeladungen von aktiven Materialien mit hoher Kapazität in den Elektroden aufrechterhalten, ohne deren Zyklenleistung zu verschlechtern. Diese Massenbeladungsniveaus entsprechen Kapazitäten pro Elektrodeneinheitsfläche, die für kommerzielle Elektroden geeignet sind, obwohl die aktiven Materialien dünn gehalten werden und im Allgemeinen unterhalb ihrer Bruchgrenzen liegen. Die Batterieelektrodenstruktur kann mehrere Schichten enthalten. Eine erste Templatschicht enthält Nanostrukturen, die auf einem Substrat angeordnet sind eine definierte Dichte aufweisen. Diese erste Schicht kann unter Verwendung einer Ausgangsmaterialschicht mit gesteuerter Dicke gebildet werden, die beispielsweise auf einem im Wesentlichen inerten Substrat vorgesehen ist.

Aus der US 2011/108108 A1 ist ein Verfahren zum Herstellen eines kristallinen Films bekannt, dass das Bereitstellen eines Films umfasst, der Impfkörner mit einer ausgewählten kristallographischen Oberflächenorientierung umfasst, der auf einem Substrat aufgebracht wird, das Bestrahlen des Films unter Verwendung einer gepulsten Lichtquelle, um ein gepulstes Schmelzen des Films zu realisieren, die eine gemischte flüssig/fest Phase ergeben, und das Erstarren lassen der gemischten fest/flüssig Phase unter Bedingungen, die eine texturierte polykristalline Schicht mit der ausgewählten Oberflächenorientierung ergeben.

Ein wichtiger Aspekt im Hinblick auf die Marktdurchdringung sind neben der Sicherheit die Herstellungskosten. Die dem Stand der Technik zugeordneten herkömmlichen Präparationsverfahren der beschriebenen Si-Nanostrukturen sind meist nasschemisch, wie u. a. das Sol-Gel-Verfahren bzw. die elektrolytische Abscheidung, und benötigen in den meisten Fällen einen Katalysator. Das macht die Herstellung solcher Anodenmaterialien kostenaufwendig.

Der Erfindung liegt deshalb die Aufgabe zugrunde, ein Verfahren zur Herstellung von auf Silizium basierenden Anoden für Sekundärbatterien anzugeben, das derart geeignet ausgebildet ist, dass eine Verbesserung aus ökonomischer Sicht und aus technischer Sicht erzielt wird. Auch soll die Kapazität erhöht werden. Außerdem sollen Ressourcen und Energie sowie Herstellungszeit und -kosten erheblich gesenkt werden. Des Weiteren sollen innere Spannungen innerhalb des Si-Anodenmaterials abgefedert werden und das Anodenmaterial soll über mehrere Größenordnungen flächig skalierbar und in Rolle-zu-Rolle-Technologie vollständig integrierbar sein.

Die Aufgabe wird durch die Merkmale des Patentanspruchs 1 gelöst.

Das Verfahren zur Herstellung von auf Silizium basierenden Anoden für Sekundärbatterien, wobei die Sekundärbatterien zumindest aus der Anode, aus mindestens einem Elektrolyten, einem Separator und einer Gegenelektrode bestehen,
weist gemäß dem Kennzeichenteil des Patentanspruchs 1 folgende Schritte auf:
- Abscheiden einer Silizium-Schicht auf einem Metallsubstrat aus Nickel oder Kupfer,
- Aufheizen des Metallsubstrats auf eine Temperatur zwischen 200 °C und 1000°C,
- Tempern des dem Metallsubstrat abgewandten Grenzflächenbereiches der Silizium-Schicht mittels einer energieintensiven Behandlung bei aufgeheiztem Metallsubstrat,
- Erzeugen von Mehrphasen im Bereich der Silizium-Schicht und des Metallsubstrats, bestehend aus amorphem Silizium und/oder kristallinem Silizium des Siliziums der Silizium-Schicht und aus kristallinem Metall des Metallsubstrats und aus Silizid.

An einer Silizium-Schicht-Grenzfläche oder an beiden Si-Schicht-Grenzflächen kann eine zusätzliche Pufferschicht oder mehrere zusätzliche Pufferschichten in Form einer metallischen, oxidischen, kohlenstoffhaltigen oder polymerhaltigen Schicht eingebracht werden.

Das Tempern kann mit Hilfe einer Anordnung zur schnellen thermischen Behandlung und Ausheilung erfolgen.

Das Metallsubstrat dient als integrierter Stromableiter.

Als Metall des Metallsubstrats kann z.B. Nickel oder Kupfer eingesetzt werden.

Die energieintensive Behandlung und der Vorgang zur Ausheilung erfolgt erfindungsgemäß mit einer Energiequelle in Form einer Blitzlichtlampe, die eine Blitzlichtdauer zwischen 0,2 ms und 20 ms und eine Energiedichte von 0.6 J/cm² und 160 J/cm² aufweist.

Die Anode auf Silizium-Basis, die nach dem vorgenannten Verfahren für Sekundärbatterien hergestellt wird,
umfasst zumindest
- ein Metallsubstrat als Trägermaterial und als Stromableiter,
- eine auf dem Metallsubstrat aufgebrachte Silizium-Schicht,
- Mehrphasen aus amorphem Silizium, kristallinem Silizium und kristallinem Metall im Bereich des Metallsubstrats und der Si-Schicht und
- kristallines Metall des Metallsubstrats.

Zumindest kann auf der dem Metallsubstrat abgewandten Grenzfläche der Silizium-Schicht eine Pufferschicht aufgebracht werden.

In dem Bereich der zweiten Grenzfläche zwischen Metallsubstrat und der Silizium-Schicht kann sich eine weitere Pufferschicht befinden.

Eine Anordnung zur schnellen thermischen Behandlung und Ausheilung der nach dem Verfahren hergestellten Anode kann
zumindest umfassen
- mindestens die hochenergetische Energiequelle, z.B. mindestens eine Blitzlampe, die auf die Silizium-Schicht der Anode gerichtet ist,
- mindestens einen der Blitzlampe zugeordneten Reflektor, der auf die Silizium-Schicht der Anode und auf die Blitzlampe gerichtet ist,
- eine Heizeinheit, die dem Metallsubstrat zugeordnet ist und zumindest das Metallsubstrat auf eine hohe Temperatur vorzugsweise zwischen 200 °C und 1000 °C beheizt,
wobei während des Heizens das Blitzlampenlicht zur Übertragung von kurzzeitiger hoher Energie auf die dem Metallsubstrat abgewandte Grenzfläche der Silizium-Schicht gerichtet ist.

Die Temperung des Bereichs der dem Metallsubstrat abgewandten zweiten Grenzfläche der Silizium-Schicht erfolgt mittels energieintensiver Bestrahlung, wobei die energieintensive Bestrahlung an mindestens einer Teilfläche der abgewandten zweiten Grenzfläche realisiert wird. Möglich ist aber auch, dass die gesamte abgewandte zweite Grenzfläche der Silizium-Schicht in einem Bestrahlungsvorgang vollflächig bestrahlt und getempert wird.

Mit dem erfindungsgemäßen Verfahren werden z.B. Siliziumstrukturen direkt auf einer Metallfolie erzeugt, und anschließend mit Hilfe einer schnellen thermischen Bearbeitung (engl. rapid thermal processing, RTP), z.B. Blitzlampenausheilung (engl. Flash lamp annealing, FLA) getempert. Die Verbesserung aus ökonomischer und technischer Sicht wird dadurch erzielt, dass die neue Erfindung im Wesentlichen ein Si-Anodenmaterial mit einem integrierten Stromableiter in einem Material ermöglicht. RTP stellt eine schnelle thermische Bearbeitung in einem Hochtemperaturprozess dar, bei dem eine sehr rasche Erhitzung der Silizium-Schicht der Anode mit Halogenlampen erzielt wird. Bei einem Einsatz von Blitzlampen wird von der FLA gesprochen.

Die in eine Prozesskammer eingebrachte erfindungsgemäße Anode kann mit mehreren Blitzlampen behandelt/bestrahlt werden, wobei die Blitzlampen aus Gasentladungslampen bestehen, die eine Strahlung im Wellenlängenbereich zwischen dem sichtbaren Bereich und Infrarotbereich (400 nm - 800 nm) emittieren und mit einer etwaigen Gesamtleistung von ca. 12 MW in weniger als 20 ms arbeiten und auf eine Temperatur von bis 2000 °C gebracht werden können.

Die Blitzlampenausheilung dient dazu, den metall-induzierten Schichtaustauschprozess, auch unter metall-induzierter Kristallisation bekannt, zu begünstigen.

Im Allgemeinen kann eine Kristallisation des Siliziums erst bei ca. 700 °C herbeigeführt werden. Nach einer Blitzlampenausheilung sind diese Si-Atome freie Atome und können schon bei niedrigeren Temperaturen entlang der Korngrenzen des Metallsubstrates diffundieren, da an der Grenzfläche zu einem Metall die kovalente Bindung der Si-Atome abgeschwächt ist. Dies wurde bei mehreren Metall/Halbleitersystemen (z.B. Au/a-Si and Ag/a-Si) bereits gezeigt und als energetisch begünstigt erwiesen, wie in der Druckschrift Z. M. Wang, J. Y. Wang, L. P. H. Jeurgens, E. J. Mittemeijer: Thermodynamics and mechanism of metal-induced crystallization in immiscible alloy systems: Experiments and calculations on Al/a-Ge and Al/a-Si bilayers, Physical Review B 77, 045424 (2008) beschrieben ist. Darüber hinaus kann eine Kristallisation des Siliziums durch das Kontaktieren mit einem Metall bei vergleichsweise niedriger Temperatur erzielt werden. Sehr stark vereinfacht, kann das kristalline Wachstum nach Unterschreiten der Schmelztemperatur einsetzen, dies kann als Kriterium für die Phasenumwandlung genutzt werden. Damit lassen sich Energie- und Herstellungskosten aufgrund der niedrigeren Bearbeitungstemperaturen zusätzlich erheblich reduzieren.

Die Erfindung betrifft ein Verfahren zur Herstellung von auf Silizium basierenden Anoden, die in Kombination mit einer Interkalationskathode, einem Separator und einem flüssigen/festen Elektrolyten in einer Sekundärbatterie mit einer mobilen Spezies (z.B. Lithium, Natrium) als Anode eingesetzt werden können.

Die Herstellung der Anode erfolgt, indem in einem ersten Schritt auf einem Metallsubstrat mit Korngrenzen eine Si-Schicht abgeschieden wird.

Eine zusätzliche dünne Schicht kann aufgebracht und weiterhin als Pufferschicht betrachtet werden, welche auch eine metallische, eine oxidische, eine kohlenstoffhaltige oder eine polymerhaltige Schicht sein kann.

Anschließend folgt in einem zweiten Herstellungsschritt eine Temperung mit Hilfe des RTP-Verfahren, d.h., mit Hilfe einer schnellen thermischen Bearbeitung, z.B. einer hochenergetischen Blitzlampenlicht-Bestrahlung, wobei die Lampenanordnung zumindest aus Blitzlampen und einem Reflektor besteht kann, wobei zumindest während des Temperns des Metallsubstrats beheizt wird.

Darüber hinaus stellen hergestellte mehrphasige Si-Legierungen zusätzliche freie Räume zum Auffangen der Volumenänderung bei der Lithiierung zur Verfügung und sorgen für die Stabilisierung des gesamten Materialverbunds. Da die verwendeten metallischen Folien (Substrate) auch gleichzeitig die Stromableiterflächen bilden, deren Größe über die Leistung der Batteriezelle letzten Endes entscheidet, nutzt das erfindungsgemäße Verfahren die großen Vorteile der Si-Nanostrukturen.

Während durch Interkalations- und Deinterkalations-Prozesse nur eine begrenzte Anzahl der Lithiumionen gespeichert werden kann, besitzen Legierungen eine höhere Speicherkapazität. Ein Beleg dafür ist die Lithium-Batterie-Entwicklung der Firma Sony mit dem Namen Nexelion, welche ein Kompositmaterial aus Kobalt-, Zinn- und Graphitlegierung verwendet und eine konstante Kapazität über mehrere Hundert Zyklen aufweist. Das heißt, eine Steigerung von mehr als 50 % im Vergleich zu herkömmlichen Graphitanode wird erreicht.

Die Neuartigkeit des erfindungsgemäßen Verfahrens zur Herstellung von hochkapazitiven, auf Silizium basierenden Anoden für Sekundärbatterien besteht darin, die Si-Strukturen direkt auf einer metallischen Folie abzuscheiden und anschließend zu tempern. Dabei entstehen mehrphasige Silizium-Metall-Strukturen, die die durch Delithiierung und Lithiierung herbeigerufene Volumenänderung abfedern und für die Stabilisierung des gesamten Materialverbunds sorgen. Das Verfahren weist gute Skalierbarkeit und eine vollständige Integrierbarkeit in Rolle-zu-Rolle-Technologie auf. Das Herstellungsverfahren von Si-Anoden mit einem integrierten Stromableiter aus einem elektrisch leitenden Material stellt hierbei eine Besonderheit der Erfindung dar. Das ermöglicht auch eine erhebliche Senkung der eingesetzten Ressourcen und Energie sowie der Herstellungszeit und -kosten.

Die Erfindung wird mittels eines Ausführungsbeispiels anhand von Zeichnungen näher erläutert.

Es zeigen:
Fig.1 eine schematische Darstellung einer erfindungsgemäßen Metall-Silizium-
   Anode, wobei
   Fig. 1a die Anode und
   Fig. 1b einen Behandlungsschritt der von einer Energiequelle in Form einer Blitzlampenanordnung ausgehenden energieintensiven Bestrahlung der Anode nach Fig. 1a und einen während des Behandlungsschritts gleichzeitig durchgeführten Beheizungsschritt des Metallsubstrats
   zeigen,
Fig. 2 ein Zyklovoltammogramm (CV) in Form von Strom(I)-Spannungs(V)-Kurven bei einer Halbzelle/ Sekundärbatterie, aus einer Ni/NiSi-Anode, aus einem mit einem Separator versehenen Elektrolyten und aus einer Gegenelektrode bestehend,
Fig. 3 eine modellhafte Beschreibung der Wachstumsfront nach einer Blitzlampenausheilung aus einer Längsschnittansicht und einer Oberflächendraufsicht: Metallschicht (Metallfolie) - abgeschiedene Si-Schicht, wobei
   Fig. 3a der Längsschnitt durch die ausgeheilte Anode mit verschiedenen Mehrphasen und kristallinem Metall
   Fig. 3b die Draufsicht auf die ausgeheilte Anode mit den verschiedenen Mehrphasen und kristallinem Metall zeigen,
Fig. 4 die mit einer Messung ermittelte chemische Zusammensetzung der Ni-Si-Phasen an der Oberfläche der Ni-Si-Anode nach einer Blitzlampenausheilung, wobei
   Fig. 4a eine mit energiedispersiver Röntgenspektroskopie charakterisierte kristalline Metallschicht gemäß Fig. 3,
   Fig. 4b eine mit energiedispersiver Röntgenspektroskopie charakterisierte kristalline Silizium-Schicht gemäß Fig. 3,
   Fig. 4c eine mit energiedispersiver Röntgenspektroskopie charakterisierte kristalline Kombination der kristallinen Metallschicht und der kristallinen Silizium-Schicht gemäß Fig. 3,
   zeigen, und
Fig. 5 einen schematischen Längsschnitt durch die wesentlichen Bestandteile einer Sekundärbatterie mit erfindungsgemäßer Anode, wobei
   Fig. 5a schematisch die Sekundärbatterie mit den darin befindlichen schichtweise angeordneten Bestandteilen darstellt und
   Fig. 5b die schematisch dargestellte schichtweise Anordnung der Bestandteile: Kathode, erster Elektrolyt, Separator, zweiter Elektrolyt, Anode mit einer am schichtweisen Rande angebrachten Isolationsschicht und mit einem auf der Isolationsschicht aufgebrachten Metallgehäuse-Mantel, wobei ein Verbraucher an Anode und Kathode angeschlossen ist.

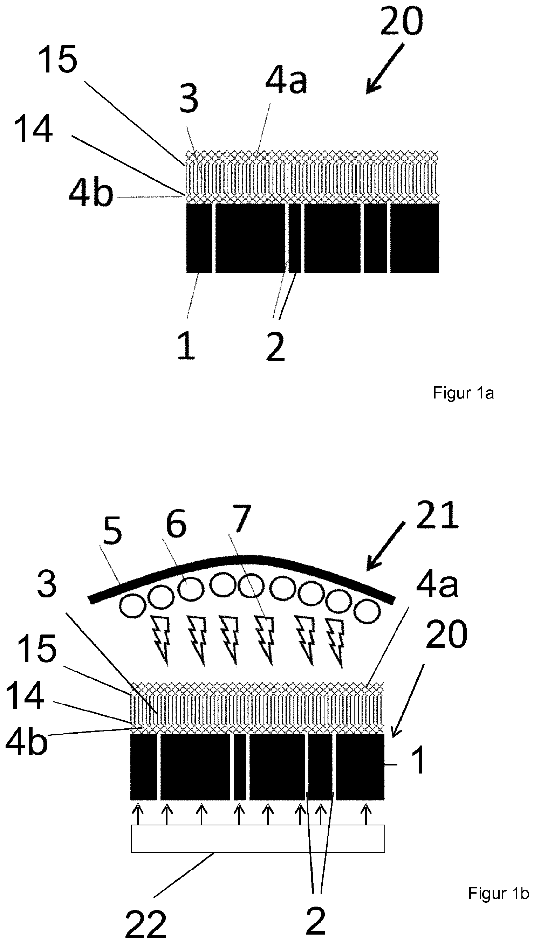

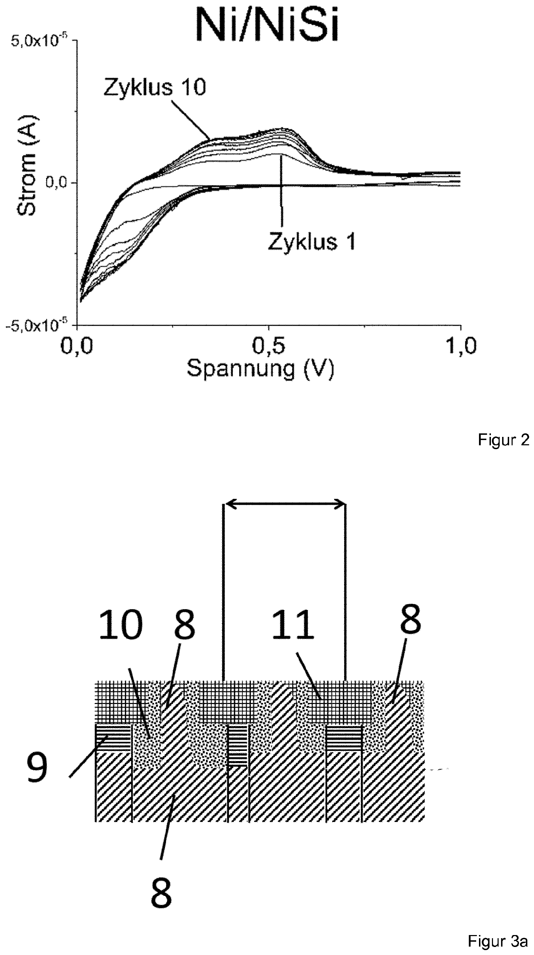

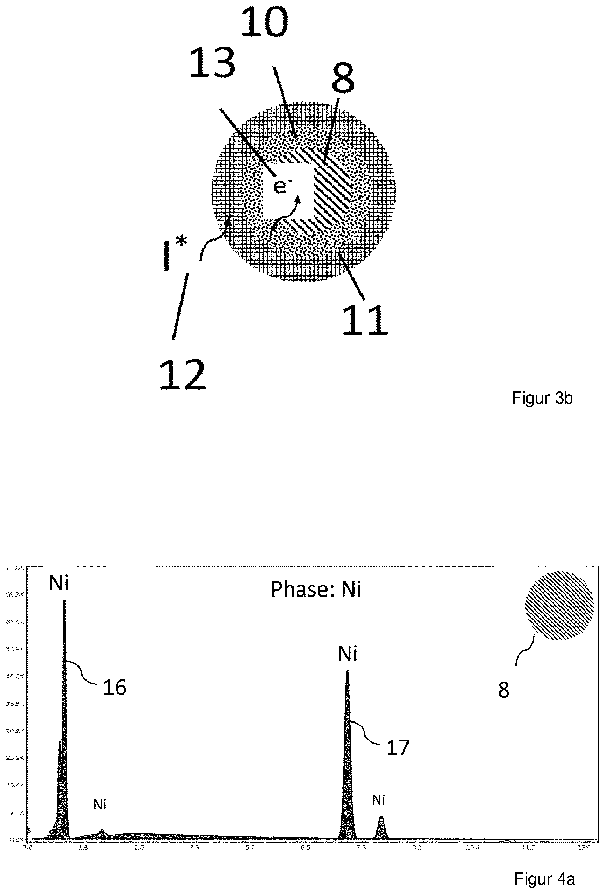

Im Folgenden wird ein Ausführungsbeispiel des Verfahrens zur Herstellung einer auf Silizium basierenden Anode 20 für Sekundärbatterien mittels Blitzlampenausheilung als Form einer kurzen intensiven Energieübergabe aus einer Anordnung 21 von Blitzlampen auf die freie Grenzfläche 15 der erfindungsgemäßen Anode 20 unter gemeinsamer Betrachtung der Fig. 1, Fig. 1a und Fig. 1b sowie Fig. 3a und Fig. 3b näher erläutert.

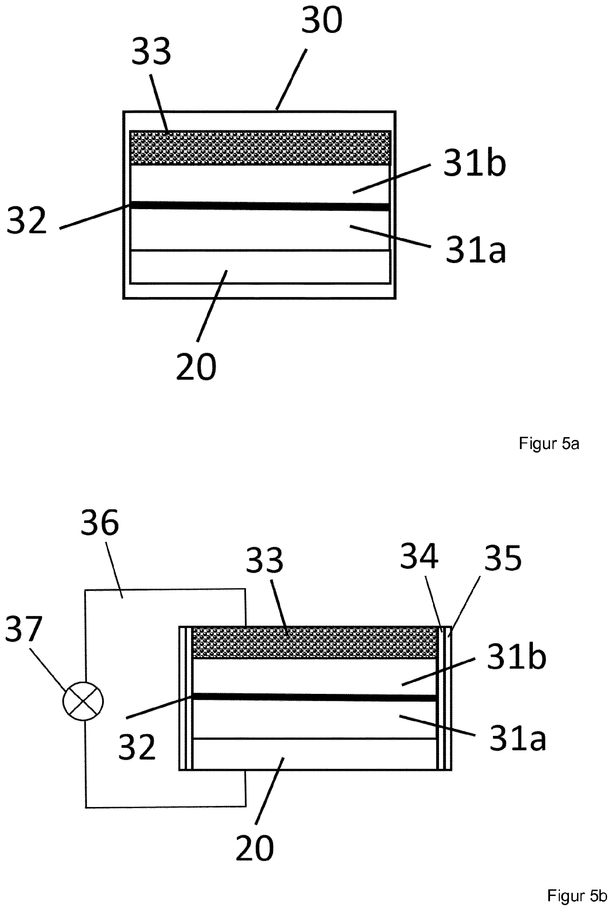

Das Verfahren zur Herstellung einer auf Silizium basierenden Anode 20 für Sekundärbatterien 30, wobei die Sekundärbatterien 30 zumindest aus der Anode 20, aus zumindest einem Elektrolyten 31a, 31b, einem Separator 32, der sich zwischen den Elektrolyten 31a und 31b befindet, und einer Gegenelektrode 33 gemäß Fig. 5 bestehen,
umfasst erfindungsgemäß folgende Schritte:
- Abscheiden einer Silizium-Schicht 3 auf einem Korngrenzen 2 aufweisenden Metallsubstrat 1, wobei zwischen Silizium-Schicht 3 und dem Metallsubstrat 1 eine erste Grenzfläche 14 vorhanden ist,
- Beheizen des Metallsubstrats 1 mittels einer Heizeinheit 22 auf eine Temperatur zwischen 200 °C und 1000°C,
- Tempern des Bereichs der dem Metallsubstrat 1 abgewandten zweiten Grenzfläche 15 der Silizium-Schicht 3 mittels einer energieintensiven Bestrahlung bei beheiztem Metallsubstrat 1,
- Erzeugen von Mehrphasen 10, 11 im Bereich der Silizium-Schicht 3 und des Metallsubstrats 1, bestehend aus amorphem Silizium und/oder kristallinem Silizium des Siliziums der Silizium-Schicht 3 und aus kristallinem Metall des Metallsubstrats 1 und aus Silizid, und
- Erzeugen von kristallinem Metall 8 des Metallsubstrats 1.

An der ersten Si-Schicht-Grenzfläche 14 zum Metallsubstrat 1 und/oder an der zweiten Si-Schicht-Grenzfläche 15 zum Elektrolyten 31b gerichtet können jeweils eine zusätzliche Pufferschicht 4a, 4b in Form einer metallischen, oxidischen, kohlenstoffhaltigen oder polymerhaltigen Schicht eingebracht werden.

Das Tempern erfolgt mit Hilfe einer Anordnung 21 zur schnellen thermischen Behandlung und Ausheilung.

Das Metallsubstrat 1 dient auch in der erfindungsgemäßen Anode 20 als integrierter Stromableiter.

Als Metall des Metallsubstrats 1 wird Nickel oder Kupfer eingesetzt.

Die energieintensive Bestrahlung zur Ausheilung erfolgt mit einer als Energiequelle ausgeführten Blitzlichtlampe 6, die eine Blitzlichtdauer zwischen 0,2 ms und 20 ms und eine Energiedichte von 0.6 J/cm² und 160 J/cm² aufweisen kann.

Die Anode 20 auf Silizium-Basis, hergestellt nach dem vorgenannten Verfahren, kann erfindungsgemäß zumindest umfassen
- ein Metallsubstrat 1, als Trägermaterial und als Stromableiter dienend,
- eine auf dem Metallsubstrat 1 aufgebrachte Silizium-Schicht 3, wobei zwischen der Silizium-Schicht 3 und dem Metallsubstrat 1 eine erste Grenzfläche 14 ausgebildet ist,
- zumindest eine auf der dem Metallsubstrat 1 abgewandten zweiten Grenzfläche 15 der Silizium-Schicht 3 aufgebrachte Pufferschicht 4a,
- Mehrphasen 10, 11 aus amorphem Silizium, kristallinem Silizium und kristallinem Metall im Bereich des Metallsubstrats 1 und der Si-Schicht 3 und
- kristallines Metall 8 des Metallsubstrats 1.

Im Bereich der ersten Grenzfläche 14 kann sich zwischen Metallsubstrat 1 und der Silizium-Schicht 3 eine weitere zweite Pufferschicht 4b befinden.

Dabei wird gemäß Fig. 1, Fig. 1a eine Si-Schicht 3 (Schichtdicke 2.2 µm) auf einer als Metallsubstrat 1 ausgebildeten Metallfolie (Ni, Schichtdicke 100 µm) mittels CVD abgeschieden und anschließend mit Hilfe einer Blitzlampenausheilung (mit einer Blitzdauer zwischen 0,2 ms und 20 ms) gemäß Fig. 1b getempert. Vor und während der hochenergieintensiven Behandlung der Silizium-Schicht 3 wird das Metallsubstrat 1 beheizt.

In Fig. 1b ist eine schematische Darstellung einer Anordnung 21 zur schnellen thermischen Behandlung und Ausheilung gezeigt, wobei die Anordnung 21 zumindest umfasst
- mindestens die energieintensive Energiequelle 6, die auf die Silizium-Schicht 3 der Anode 20 gerichtet ist,
- eine Heizeinheit 22, die dem Metallsubstrat 1 zugeordnet ist und die das Metallsubstrat 1 und die Silizium-Schicht 3 auf eine Temperatur zwischen 200 °C und 1000 °C beheizt,
wobei während des Heizens die Energiequelle 7 zur Übertragung von kurzzeitiger hoher Energie auf die dem Metallsubstrat 1 abgewandte zweite Grenzfläche 15 der Silizium-Schicht 3 gerichtet ist.

Die energieintensive Energiequelle 6 in Fig. 1b kann zumindest umfassen
- als energieintensive Energiequelle 6 mindestens die Blitzlampe, die auf die zweite Grenzfläche 15 der Silizium-Schicht 3 der Anode 20 gerichtet ist, und
- mindestens einen der Blitzlampe 6 zugeordneten Reflektor 5, wobei das Bestrahlungslicht 7 auf die Silizium-Schicht 3 gerichtet ist,
wobei während des Heizens das Bestrahlungslicht 7 zur Übertragung von kurzzeitiger hoher Energie auf die dem Metallsubstrat 1 abgewandte zweite Grenzfläche 15 der Silizium-Schicht 3 gerichtet ist.

Eine elektrochemische Charakterisierung mittels zyklischer Voltammetrie (engl. Cyclic voltammetry, CV) einer Batterieknopfzelle aus einer amorphen nanostrukturierten Legierung mit Si-Anodenmaterial und mit dem Materialsystem Ni/NiSi gegenüber einem flüssigen Elektrolyten, z.B. 1Mol LiTFSI in Dimethoxyethan/Dioxolan Gemisch (1:1 vol.) und einer Referenzelektrode, z.B. einer Lithium-Elektrode, wird in Fig. 2 gezeigt.

Die Fig. 2 zeigt ein Zyklovoltammogramm (CV) in Form von Strom(I)-Spannungs(V)-Kurven bei einer als Sekundärbatterie ausgebildeten Halbzelle aus einer Ni-NiSi-Anode, aus einem flüssigen Elektrolyten und der Gegenelektrode bei einer konstanten Auf-/Entladespannung von 20 µV/s. Die CV- bzw. IV-Messung wird bei einer konstanten Auflade-/Entladespannung von 20 µV/s durchgeführt. Es zeigt sich, dass im ersten Zyklus eine Lithiierung von Silizium stattfindet, welches dann bei der Ladung wieder delithiiert wird. Insgesamt wurden in Fig. 2 zehn Zyklen bei der gleichen Auflade-/Entladespannung von 20 µV/s durchgeführt. Unter Delithiierung/Lithiierung wird eine Auslagerung bzw. Einlagerung der Lithium-Ionen im Wirtsmaterial, z.B. Si-Legierung verstanden.

Fig. 3, Fig. 3a zeigt einen Längsschnitt durch die erfindungsgemäße Anode 20 mit einer aus der Morphologie-Untersuchung hergeleiteten modellhaften Beschreibung der Wachstumsfront nach der Blitzlampenausheilung einer auf der Ni-Folie 1 abgeschiedenen Si-Schicht 3. Es führt zu einer Diffusion der Si-Atome entlang der im Metallsubstrat 1 vorkommenden Korngrenzen 2 und zur Bildung einer kristallinen c-Si Schicht 9. Es werden weitere Mehrphasen 10 aus a-Si+c-Ni (amorphem Silizium und kristallinem Nickel) bzw. Mehrphasen 11 aus a-Si+c-Si+c-Ni kristallin (amorphem Silizium und kristallinem Silizium und kristallinem Nickel) in kristalliner Form gebildet. In Fig. 3b ist eine Draufsicht auf die mit RTP hergestellte Anode 20 dargestellt, wobei neben den Mehrphasen 10 und Mehrphasen 11 auch Ionen I⁺ der mobilen Spezies 12 und freiwerdende Elektronen 13 e⁻ vorhanden sind.

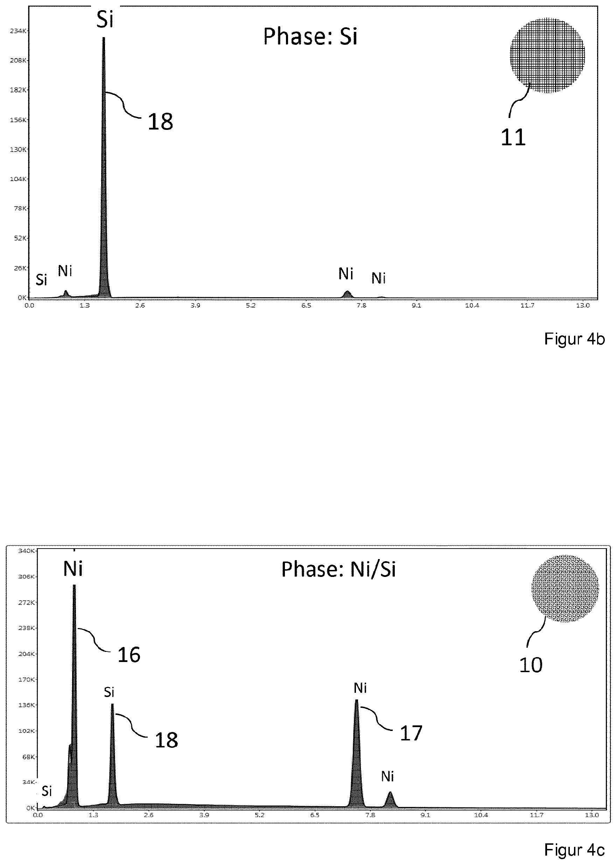

Fig. 4 zeigt bezogen auf die Fig. 3b eine ebenso aus den Morphologie-Untersuchungen gewonnene modellhafte Beschreibung der erzeugten Strukturen auf der Ni-NiSi Oberfläche nach der Biltzlampenausheilung und deren chemischen Zusammensetzungen mittels eines Verfahrens von energiedispersiver Röntgenspektroskopie. Aus der energiedispersiven Röntgenspektroskopie sind eindeutig die resultierenden Ni-Phasen und Si-Phasen der in Fig. 3, 3a und 3b beschriebenen Strukturen angegeben. Die Fig. 4a zeigt das röntgenspektroskopische Ergebnis der kristallinen Nickel-Oberfläche der Nickel-Schicht 8 mit Nickel-Signalamplituden 16 und 17, die Fig. 4b zeigt das röntgenspektroskopische Ergebnis der kristallinen Oberfläche der Mehrphase 10 mit Silizium-Signalamplituden 18 und die Fig. 4c zeigt das röntgenspektroskopische Ergebnis der kristallinen Oberfläche der Mehrphase 11 mit Nickel-Signalamplituden 16 und 17 und der Silizium-Signalamplitude 18.

Die Fig. 5 zeigt eine schematische Darstellung einer Sekundärbatterie 30, bestehend zumindest aus den Bestandteilen
- einer Kathode 33,
- einem ersten Elektrolyt 31a,
- einem Separator 32,
- einem zweiten Elektrolyt 31b,
- der erfindungsgemäßen Anode 20,
wobei dem zweiten Elektrolyten 31b die erfindungsgemäße Anode 20 nachgeordnet ist, und
wobei die Bestandteile 33, 31a, 32, 31b, 20 in der genannten Reihenfolge innerhalb der Sekundärbatterie 30, wie in Fig. 5a und in Fig. 5b gezeigt, schichtweise zusammengeführt sind.

In Fig. 5a ist die Sekundärbatterie 30 mit den darin befindlichen schichtweise angeordneten Bestandteilen 33, 31a, 32, 31b, 20 dargestellt.

In Fig. 5b besitzt die schematisch dargestellte schichtweise Anordnung der Bestandteile: Kathode 33, erster Elektrolyt 31a, Separator 32, zweiter Elektrolyt 31b, Anode 20 am schichtweisen Rande eine daran angebrachte Isolationsschicht 34 und einen auf der Isolationsschicht 34 aufgebrachten Metallgehäuse-Mantel 35. Die Anode 20 und die Kathode 33 stehen jeweils mit Verbraucherstromleitungen 36 in Verbindung, an die mindestens ein Verbraucher 37 angeschlossen ist.

Folgende Vorteile sind vorhanden:
Die Si-Schichten 3, die dem erfindungsgemäßen Verfahren zugrunde liegen, sind chemisch stabiler, kostengünstiger, sowie weniger zeit- und energieaufwendiger als die Si-Schichten, die in der Druckschrift WO 2012158608 A1 beschrieben sind.

Die Pufferschicht 4a, die der Si-Schicht 3 zugeordnet und auf der die Si-Schicht 3 angelagert ist und die der Metallfolie 1 gegenüberliegt, tritt nicht auf der Stromableiterseite auf, und kann daher die elektrische Leitfähigkeit, welche die Leistung der Anode 20 bestimmt, nicht beeinträchtigen.

Die Si-Schicht 3, die dem erfindungsgemäßen Verfahren zugrunde liegt, wird direkt auf dem Metallsubstrat 1 abgeschieden. Dabei wird sich durch die schnelle thermische Behandlung gemäß Fig. 1b ein metall-induzierter Schichtaustauschprozess zwischen der Metall-Schicht 1 und der Silizium-Schicht 3 zu Nutze gemacht. Das metallische Substrat 1 wird als ein integrierter Stromableiter, im Gegensatz zum Stromableiter für die Anode in der Druckschrift US 2014/0370386 A1, betrachtet.

Unter Rolle-zu-Rolle-Technologie wird Folgendes verstanden:
Mittels einer Rolle-zu-Rolle-Technologie kann sowohl die Abscheidung der Siizium-Schicht 3 auf dem Metallsubstrat 1 als auch die Abscheidung der Pufferschichten 14 und/oder 15 sowie die thermische Behandlung und Ausheilung auf einem auf einer Rolle befindlichen Metallsubstrat 1 erfolgen, das abgerollt, beschichtet, beheizt und bearbeitet sowie schließlich wieder aufgerollt wird. Die benötigte Anode 20 wird dann der Rolle entnommen.

### Bezugszeichenliste

- 1: Metallsubstrat
- 2: Korngrenze
- 3: Si-Schicht
- 4a: erste metallische/oxidische/kohlenstoffhaltigen/polymerhaltige Pufferschicht
- 4b: zweite metallische/oxidische/kohlenstoffhaltigen/polymerhaltige Pufferschicht
- 5: Reflektor
- 6: energieintensive Energiequelle
- 7: Bestrahlungslicht
- 8: Kristalline Metallschicht (c-Me)
- 9: Kristalline Si-Schicht (c-Si)
- 10: mehrphasige Schicht aus c-Me, c-Si
- 11: mehrphasige Schicht aus c-Me, c-Si und amorphem Si (a-Si)
- 12: Ion der mobilen Spezies, z.B. Li⁺
- 13: freie Elektronen
- 14: erste Grenzfläche
- 15: zweite Grenzfläche
- 16: erste Nickel-Signalamplitude
- 17: zweite Nickel-Signalamplitude
- 18: Silizium-Signalamplitude
- 20: erfindungsgemäße Anode
- 21: Anordnung zur energieintensiven Behandlung/Lampenanordnung
- 22: Heizeinheit
- 30: Sekundärbatterie aus der erfindungsgemäßen Anode, zwei Elektrolyten, einem zwischen den beiden Elektrolyten befindlichen Separator und einer Kathode
- 31a: erster Elektrolyt
- 31b: zweiter Elektrolyt
- 32: Separator
- 33: Kathode
- 34: Isolationsschicht
- 35: Metallgehäuse-Mantel
- 36: Verbraucherstrom leitungen
- 37: Verbraucher

## Patentansprüche

1. Verfahren zur Herstellung von auf Silizium basierenden Anoden für Sekundärbatterien (30), wobei die Sekundärbatterien (30) zumindest aus der Anode, aus mindestens einem Elektrolyten (31a, 31b) und einer Gegenelektrode (33) bestehen, durch folgende Schritte gekennzeichnet:
- Abscheiden einer Silizium-Schicht (3) auf einem Metallsubstrat (1) aus Nickel oder Kupfer, wobei die Silizium-Schicht (3) zum Metallsubstrat (1) gerichtet eine erste Grenzfläche (14) aufweist,
- Beheizen des Metallsubstrats (1) mittels einer Heizeinheit (22) auf eine Temperatur zwischen 200 °C und 1000 °C,
- Tempern des Bereiches der dem Metallsubstrat (1) abgewandten zweiten Grenzfläche (15) der Silizium-Schicht (3) mittels einer Bestrahlung während der Beheizung, wobei die Bestrahlung und der Vorgang zur Ausheilung zumindest mit einer Energiequelle in Form einer Blitzlichtlampe (6) erfolgen, die eine Blitzlichtdauer zwischen 0,2 ms und 20 ms und eine Energiedichte von 0.6 J/cm² und 160 J/cm² aufweist, wodurch Mehrphasen (10, 11) im Bereich der Silizium-Schicht (3) und des Metallsubstrats (1), bestehend aus amorphem Silizium und/oder kristallinem Silizium des Siliziums der Silizium-Schicht (3) und kristallinem Metall (8) des Metallsubstrats (1), erzeugt werden.

2. Verfahren nach Anspruch 1, **dadurch gekennzeichnet, dass** an der zweiten Si-Schicht-Grenzfläche (15) zum Elektrolyten (31b) gerichtet jeweils eine Pufferschicht (4a, 4b) in Form einer metallischen, oxidischen, kohlenstoffhaltigen oder polymerhaltigen Schicht eingebracht werden.

3. Verfahren nach Anspruch 1, **dadurch gekennzeichnet, dass** das Tempern mit Hilfe einer Anordnung (21) zur thermischen Behandlung und Ausheilung erfolgt.

4. Verfahren nach Anspruch 1, **dadurch gekennzeichnet, dass** das Metallsubstrat (1) als integrierter Stromableiter dient.

5. Verfahren nach Anspruch 1, **dadurch gekennzeichnet, dass** mittels einer Rolle-zu-Rolle-Technologie sowohl die Abscheidung der Silizium-Schicht 3 auf dem Metallsubstrat 1 als auch der Pufferschichten 14 und/oder 15 sowie die thermische Behandlung und Ausheilung auf einem auf einer Rolle befindlichen Metallsubstrat 1 erfolgt, das abgerollt, beschichtet, beheizt und bearbeitet sowie schließlich wieder in der Rolle aufgerollt wird.

6. Anode (20) auf Silizium-Basis, hergestellt nach einem Verfahren der Ansprüche 1 bis 5, für Sekundärbatterien (30), **dadurch gekennzeichnet, dass** die Anode (20) zumindest umfasst ein Metallsubstrat (1), als Trägermaterial und als Stromableiter dienend, eine auf dem Metallsubstrat (1) aufgebrachte Silizium-Schicht (3) mit einer Ausbildung einer ersten Grenzfläche (14) zum Metallsubstrat (1), Mehrphasen (10, 11) aus amorphem Silizium, kristallinem Silizium und kristallinem Metall im Bereich des Metallsubstrats (1) und der Silizium-Schicht (3).

7. Anode nach Anspruch 6, **dadurch gekennzeichnet, dass** auf einer dem Metallsubstrat (1) abgewandten zweiten Grenzfläche (15) der Silizium-Schicht (3) mindestens eine Pufferschicht (4a) aufgebracht ist.

8. Sekundärbatterie (30) mit einer Anode (20) nach den Ansprüchen 6 oder 7, hergestellt nach dem Verfahren nach den Ansprüchen 1 bis 5, bestehend zumindest aus den Bestandteilen:
- einer Kathode (33),
- einem ersten Elektrolyt (31a),
- einem Separator (32),
- einem zweiten Elektrolyt (31b),
**dadurch gekennzeichnet,**
**dass** dem zweiten Elektrolyten (31b) die Anode (20) nachgeordnet ist, wobei die Anode (20) nach dem Verfahren nach den Ansprüchen 1 bis 6 hergestellt ist, wobei die Bestandteile: Kathode (33), erster Elektrolyt (31a), Separator (32), zweiter Elektrolyt (31b) und Anode (20), in der genannten Reihenfolge innerhalb der Sekundärbatterie (30) schichtweise zusammengeführt sind.

## Claims

1. Process for producing silicon-based anodes for secondary batteries (30) where the secondary batteries (30) consist of at least the anode, at least one electrolyte (31a, 31b) and a counterelectrode (33), **characterized by** the following steps:
- deposition of a silicon layer (3) on a metal substrate (1) composed of nickel or copper, where the silicon layer (3) has a first interface (14) directed towards the metal substrate (1),
- heating of the metal substrate (1) by means of a heating unit (22) to a temperature in the range from 200°C to 1000°C,
- heat treatment of the region of the second interface (15) of the silicon layer (3) facing away from the metal substrate (1) by means of irradiation during heating, where the irradiation and the procedure for healing are carried out at least using an energy source in the form of a flash lamp (6) which has a flash duration in the range from 0.2 ms to 20 ms and an energy density of from 0.6 J/cm² to 160 J/cm², as a result of which multiple phases (10, 11) consisting of amorphous silicon and/or crystalline silicon of the silicon of the silicon layer (3) and crystalline metal (8) of the metal substrate (1) are produced in the region of the silicon layer (3) and of the metal substrate (1).

2. Process according to Claim 1, **characterized in that** a buffer layer (4a, 4b) in the form of a metallic, oxidic, carbon-containing or polymer-containing layer is introduced at the second Si layer interface (15) directed towards the electrolyte (31b).

3. Process according to Claim 1, **characterized in that** the heat treatment is carried out using an arrangement (21) for thermal treatment and healing.

4. Process according to Claim 1, **characterized in that** the metal substrate (1) serves as integrated power outlet lead.

5. Process according to Claim 1, **characterized in that** both the deposition of the silicon layer 3 on the metal substrate 1 and also the buffer layers 14 and/or 15 and the thermal treatment and healing are carried out by means of reel-to-reel technology on a metal substrate 1 which is present on a reel and is rolled off, coated, heated and processed and finally rolled up again on the reel.

6. Silicon-based anode (20) produced by a process according to Claims 1 to 5 for secondary batteries (30), **characterized in that** the anode (20) comprises at least a metal substrate (1) serving as support material and as power outlet lead, a silicon layer (3) applied to the metal substrate (1) with formation of a first interface (14) to the metal substrate (1), multiple phases (10, 11) composed of amorphous silicon, crystalline silicon and crystalline metal in the region of the metal substrate (1) and of the silicon layer (3).

7. Anode according to Claim 6, **characterized in that** at least one buffer layer (4a) has been applied on a second interface (15) of the silicon layer (3) facing away from the metal substrate (1).

8. Secondary battery (30) comprising an anode (20) according to Claim 6 or 7, produced by the process according to Claims 1 to 5, consisting of at least the constituents:
- a cathode (33),
- a first electrolyte (31a),
- a separator (32),
- a second electrolyte (31b),
**characterized in that** the anode (20) is arranged after the second electrolyte (31b), where the anode (20) has been produced by the process according to Claims 1 to 6, where the constituents: cathode (33), first electrolyte (31a), separator (32), second electrolyte (31b) and anode (20) are assembled layerwise in the specified order within the secondary battery (30).

## Revendications

1. Procédé pour la fabrication d'anodes à base de silicium pour des batteries secondaires (30), les batteries secondaires (30) étant constituées au moins de l'anode, d'au moins un électrolyte (31a, 31b) et d'une contre-électrode (33), **caractérisé par** les étapes suivantes :
- dépôt d'une couche de silicium (3) sur un substrat métallique (1) à base de nickel ou cuivre, la couche de silicium (3) comportant une première surface limite (14) orientée vers le substrat métallique (1),
- chauffage du substrat métallique (1) au moyen d'une unité de chauffage (22) jusqu'à une température comprise entre 200 °C et 1 000 °C,
- traitement thermique de la zone de la seconde surface limite (15), opposée au substrat métallique (1), de la couche de silicium (3) au moyen d'une irradiation pendant le chauffage, l'irradiation et le processus conduisant à la régénération s'effectuant au moins avec une source d'énergie sous forme d'une lampe éclair (6) qui présente une durée d'éclair entre 0,2 ms et 20 ms et une densité d'énergie entre 0,6 J/cm² et 160 J/cm², ce par quoi des phases multiples (10, 11) sont engendrées dans la zone de la couche de silicium (3) et du substrat métallique (1), constituées de silicium amorphe et/ou silicium cristallin du silicium de la couche de silicium (3) et métal cristallin (8) du substrat métallique (1).

2. Procédé selon la revendication 1, **caractérisé en ce qu'**on introduit sur la seconde surface limite (15) de la couche de silicium chaque fois, orientée vers l'électrolyte (31b) une couche tampon (4a, 4b) sous forme d'une couche métallique, de type oxyde, contenant du carbone ou contenant du polymère.

3. Procédé selon la revendication 1, **caractérisé en ce que** le traitement thermique s'effectue à l'aide d'un dispositif (21) destiné au traitement thermique et à la régénération.

4. Procédé selon la revendication 1, **caractérisé en ce que** le substrat métallique (1) sert de collecteur de courant intégré.

5. Procédé selon la revendication 1, **caractérisé en ce qu'**au moyen d'une technologie rouleau-à-rouleau le dépôt aussi bien de la couche de silicium 3 sur le substrat métallique 1 que des couches tampons 14 et/ou 15 ainsi que le traitement thermique et la régénération s'effectuent sur un substrat métallique 1 se trouvant sur un rouleau, qui est déroulé, revêtu, chauffé et traité ainsi que finalement de nouveau enroulé dans le rouleau.

6. Anode (20) à base de silicium, fabriquée conformément à un procédé selon les revendications 1 à 5, pour des batteries secondaires (30), **caractérisée en ce que** l'anode (20) comprend au moins un substrat métallique (1), servant de matériau de support et de collecteur de courant, une couche de silicium (3) appliquée sur le substrat métallique (1), ayant une configuration d'une première surface limite (14) orientée vers le substrat métallique (1), de phases multiples (10, 11) de silicium amorphe, silicium cristallin et métal cristallin dans la zone du substrat métallique (1) et de la couche de silicium (3).

7. Anode selon la revendication 6, **caractérisée en ce qu'**au moins une couche tampon (4a) est appliquée sur une seconde surface limite (15) de la couche de silicium (3), opposée au substrat métallique (1).

8. Batterie secondaire (30) comportant une anode (20) selon la revendication 6 ou 7, fabriquée conformément au procédé selon les revendications 1 à 5, constituée au moins des composants :
- une cathode (33),
- un premier électrolyte (31a),
- un séparateur (32), un second électrolyte (31b),
**caractérisée en ce que**
l'anode (20) est disposée en aval du second électrolyte (31b), l'anode (20) étant fabriquée conformément au procédé selon les revendications 1 à 6, les composants : cathode (33), premier électrolyte (31a), séparateur (32), second électrolyte (31b) et anode (20) étant réunis par couches dans l'ordre indiqué à l'intérieur de la batterie secondaire (30).
